## Europäisches Patentamt
## European Patent Office
## Office européen des brevets

(19)

(11) Numéro de publication: **0 182 694**
**B1**

(12) # FASCICULE DE BREVET EUROPÉEN

(45) Date de publication du fascicule du brevet:
18.05.88

(51) Int. Cl.⁴: **B 60 V 3/06**

(21) Numéro de dépôt: **85402098.9**

(22) Date de dépôt: **31.10.85**

(54) **Navire à quilles latérales à effet de surface muni d'une fermeture avant perfectionnée de coussin de sustentation.**

(30) Priorité: **12.11.84 FR 8417168**

(43) Date de publication de la demande:
**28.05.86 Bulletin 86/22**

(45) Mention de la délivrance du brevet:
**18.05.88 Bulletin 88/20**

(84) Etats contractants désignés:
**DE GB IT NL SE**

(56) Documents cité:
**FR-A-2 422 535**
**GB-A-1 210 973**
**GB-A-1 277 884**
**US-A-3 782 494**
**US-A-3 987 865**

(73) Titulaire: **ETAT- FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées (FR)**

(72) Inventeur: **Bertrand, Jean- Paul, 15, Bd Exelmans, F-75016 Paris (FR)**
Inventeur: **Guezou, Jean- Pierre, 11, Clos Pérault, F-91200 Athis Mons (FR)**
Inventeur: **Jodelet, François, Les Vachonnes, F-38960 St Etienne de Crossey (FR)**
Inventeur: **Balquet, Robert Jean, 35, rue Le Marois, F-75016 Paris (FR)**
Inventeur: **Marcouyoux, Sylvain, Le Verger Debeauvoir Villa No. 2, F-83220 Le Pradet (FR)**

EP 0 182 694 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les navires comportant une structure sustentée par des coussins de fluide sous pression dits navires à effet de surface.

La présente invention concerne plus précisément les navires à effet de surface à quilles latérales, du type comportant une structure sustentée munie d'un dispositif de fermeture arrière et un dispositif de fermeture avant aptes à coopérer avec les quilles latérales pour délimiter un coussin central de sustentation alimenté par des moyens générateurs d'air sous pression, aptes à naviguer sous deux modes de navigation, soit en navigation archimédienne sur coque, soit en sustentation sur coussin.

On a déjà tenté de réaliser de tels navires à effet de surface à quilles latérales.

Les brevets US-A-3 977 491, 3 987 865, et 4 090 459, ainsi que les brevets GB-A-1 210 973, 1 242 131, ou encore le brevet FR-A-2 422 535 illustrent par exemple différentes approches théoriques de ces dispositifs.

Toutefois, en pratique, les tentatives actuelles n'ont pas donné pleinement satisfaction en ce qui concerne le confort en pilonnement du navire dans toutes les conditions de mer, le suivi de la houle, la limitation des fuites et des variations de débits de fuites sur la périphérie des coussins, le franchissement d'éventuels obstacles, et par conséquent les performances. En outre, les navires antérieurs ne sont conçus que pour un mode de navigation en sustentation sur coussin, la navigation sur coque n'étant qu'un mode accessoire à basse vitesse et éventuellement utilisé entre l'arrêt et la navigation sur coussin.

Les inventeurs ont déterminé en particulier que les problèmes précités rencontrés avec les réalisations jusqu'ici proposées étaient dus pour une grande part aux modes d'alimentation du coussin central et des dispositifs de fermeture respectivement avant et arrière de tels navires.

D'une façon générale, les moyens jusqu'ici proposés pour délimiter le coussin central de sustentation des navires à effet de surface à quilles latérales comprennent, l'avant, une jupe multilobée généralement verticale ouverte vers le coussin central, et à l'arrière une enceinte d'extension horizontale. C'est le cas du brevet GB-A-1 242 131.

Le plus souvent, l'enceinte constituant la fermeture arrière est totalement séparée du coussin central et reliée aux moyens générateurs d'air sous pression par des conduits associés. L'alimentation en air sous pression de l'enceinte est totalement séparée du coussin central, ainsi que le montre le brevet FR-A-2 422 535.

Selon d'autres propositions moins communes, comme celle du brevet US-A-3 987 865, le dispositif de fermeture avant et le dispositif de fermeture arrière-jupe multilobée et enceinte horizontale sont alimentés par des générateurs d'air sous pression séparés et respectivement associés, tandis que le coussin central est alimenté indirectement par l'intermédiaire des dispositifs de fermeture avant et arrière.

Par rapport au document FR-A-2 422 535 qui décrit déjà un navire à effet de surface du type comportant une structure sustentée munie de deux quilles latérales, un dispositif de fermeture arrière et un dispositif de fermeture avant aptes a coopérer avec les quilles latérales pour délimiter un coussin central de sustentation alimenté par un générateur d'air sous pression la fermeture avant comprenant une enceinte supérieure s'étendant entre les deux quilles latérales et une enceinte inférieure:

- l'enceinte supérieure d'extension horizontale étant constituée d'une paroi inférieure connectée en-dessous de la structure sustentée et d'une paroi avant convexe vers l'extérieur attaché vers le haut à la structure sustentée, l'invention est caractérisée en ce que:

- l'enceinte inférieure est délimitée par deux rangées de jupes inférieures multilobées raccordées en-dessous de l'enceinte supérieure, délimitant entre elles des chambres intermédiaires,

- l'enceinte supérieure est alimentée par le coussin central et l'enceinte inférieure par l'enceinte supérieure, pour assurer un pilotage vertical de la fermeture avant.

Ainsi la pression variable, fonction de la position de la fermeture par rapport à la surface libre, qui s'installe dans les chambres intermédiaires réalise, sans intervention extérieure, le pilotage de la fermeture afin d'une part de limiter le contact des jupes avec l'eau, ce qui réduit leur trainée et leur usure, d'autre part, de réduire les variations de débit de fuites et donc les variations de pression dans le coussin et par ailleurs d'améliorer le confort du navire par un rappel en tangage progressif, c'est-à-dire la création d'un couple de rappel qui s'oppose au mouvement du navire. Tout cela conduit bien entendu à améliorer le confort en pilonnement du navire.

Selon une autre caractéristique importante de l'invention, la structure sustentée présente à l'avant une paroi inclinée vers le haut en éloignement du centre du coussin central, et l'enveloppe de l'enceinte supérieure, convexe vers l'extérieur, est raccordée tangentiellement sur cette paroi inclinée. Comme cela sera évoqué plus en détail par la suite, la raideur de la suspension avant est liée à l'inclinaison de la paroi précitée sur l'horizontale, et peut de ce fait être aisément contrôlée. Ainsi, selon une variante, choisie dans le but d'obtenir une suspension moins raide, l'enveloppe de l'enceinte supérieure est raccordée de façon sécante à l'avant de la paroi inclinée.

Selon une autre caractéristique de l'invention, la fermeture avant comprend en outre une enveloppe complémentaire disposée sur l'avant de l'enceinte supérieure associée et raccordée d'une part à l'extrémité supérieure de la rangée de jupes la plus avant, d'autre part sur l'avant de la structure sustentée.

Selon une autre caractéristique avantageuse de l'invention, les orifices ménagés dans l'enceinte supérieure de la fermeture avant pour assurer l'alimentation de celle-ci à partir du coussin central et l'alimentation des chambres intermédiaires à partir de l'enceinte supérieure sont adaptés pour assurer en statique une pression de l'enceinte du même ordre de grandeur que la pression dans le coussin central et une pression dans les chambres intermédiaires comprise entre 0,3 fois et 0,75 fois la pression du coussin central, ceci afin de réaliser une marge de variation de pression suffisante dans les chambres intermédiaires pour garantir la fonction d'autorégulation des fermetures ou en d'autres termes pour assurer le pilotage vertical de la fermeture.

La présente invention vise également à permettre la navigation d'un navire à effet de surface à quilles latérales selon deux modes de fonctionnement, soit en navigation archimédienne sur coque, soit en sustentation sur coussin, de telle sorte que le navire puisse être utilisé à haute vitesse, tant en navigation sur coque que sur coussin.

Afin d'assurer la navigation sur coque du navire conformément à la présente invention, des moyens de relevage sont de préférence prévus sur les fermetures avant et arrière.

Ces moyens de relevage peuvent être avantageusement formés de câbles fixés d'une part à la partie inférieure des fermetures, et d'autre part sur des treuils associés.

Par ailleurs, du fait que l'on désire un débattement vertical de la fermeture par rapport aux quilles latérales en navigation sur coussin, sans trop compromettre les qualités d'étanchéité latérale, des éléments antifriction sont disposés sur les extrémités latérales des fermetures, pour glisser sur la paroi latérale de quilles respectivement associée.

D'autre part, l'étanchéité de la structure sustentée est complétée par la décharge de l'enceinte complémentaire, la décharge pouvant être ajustée, dans une variante, par des éléments d'étanchéité formant bavette dont sont dotées les extrémités latérales des enceintes supérieures et complémentaires.

D'autres caractéristiques et avantages de la présente invention apparaîtront à la lecture de la description détaillée qui va suivre et en regard des dessins annexés donnés à titre d'exemples non limitatifs et sur lesquels:

- la figure 1 représente une vue schématique en coupe partielle longitudinale verticale d'un navire à effet de surface à quilles latérales conforme à la présente invention,
- la figure 2 représente une vue transversale avant du même navire,
- la figure 3 représente une vue schématique partielle de dessous, de la portion avant d'un navire à effet de surface à quilles latérales conforme à la présente invention,
- la figure 4 illustre une vue schématique en perspective d'une fermeture avant selon la présente invention,
- la figure 5 illustre une première variante de réalisation d'une fermeture avant conforme à la présente invention, selon un plan de coupe verticale longitudinale,
- la figure 6 illustre schématiquement une seconde variante de réalisation d'une fermeture avant conforme à la présente invention, selon un plan de coupe verticale longitudinale similaire,
- la figure 7 illustre une troisième variante de réalisation d'une fermeture avant conforme à la présente invention, selon un plan de coupe verticale longitudinale similaire,
- la figure 8 représente une vue latérale agrandie des éléments antifriction illustrés sur la figure 4,
- la figure 9 représente une vue des mêmes éléments antifriction latéraux selon une section généralement orthogonale à l'axe des jupes inférieures.

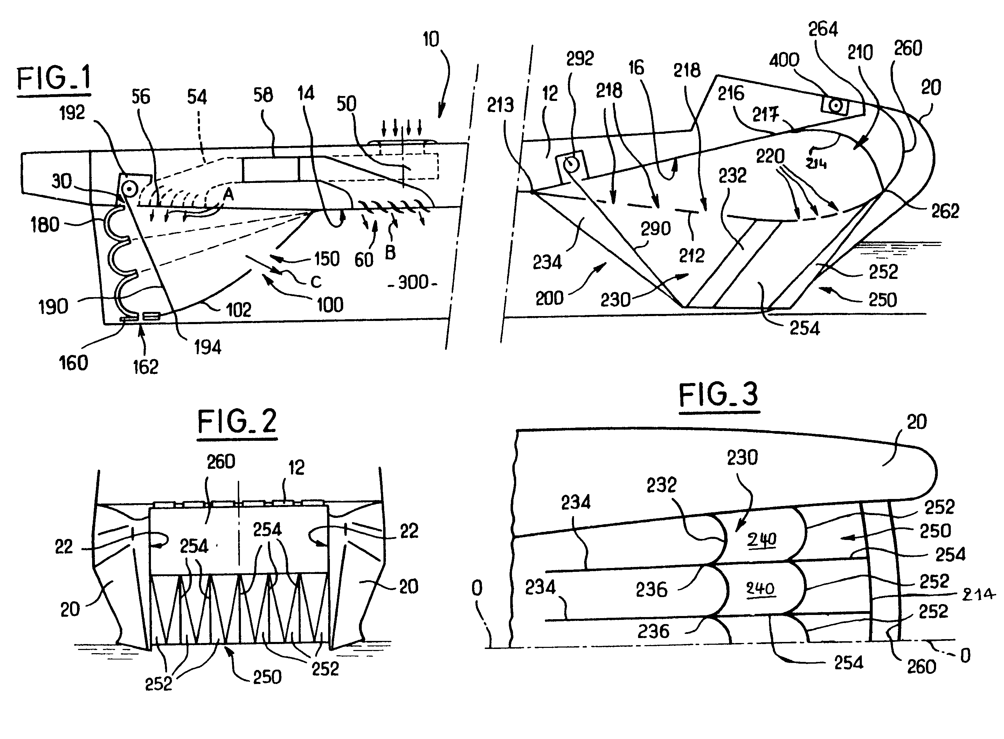

On a représenté sur les figures, en particulier sur les figures 1 à 3, un navire à effet de surface 10 conforme à la présente invention comprenant une structure sustentée 12 munie de deux quilles latérales 20 et comportant par ailleurs un dispositif de fermeture arrière 100 et un dispositif de fermeture avant 200 aptes à coopérer avec les quilles latérales 20 pour délimiter un coussin central de sustentation 300 alimenté par un générateur d'air sous pression, ou ventilateur, 50.

La géométrie de la structure sustentée 12 représentée sur les figures ne doit bien entendu aucunement être considérée comme limitative. Il en est de même pour la géométrie des quilles latérales 20.

On notera cependant que, comme représenté sur la figure 1, la surface inférieure 14 de la structure sustentée 12 est pour l'essentiel généralement horizontale, à l'exception d'une portion, la plus avant, référencée 16 sur la figure 1 qui est inclinée vers le haut en éloignement du centre du coussin central 300.

Par ailleurs, selon le mode de réalisation représenté sur les figures, en particulier sur la figure 2, les surfaces internes latérales 22 des quilles 20 s'étendent généralement verticalement au droit des fermetures.

Nous allons maintenant décrire la structure de la fermeture avant 200 représentée sur les figures.

Cette fermeture avant 200 comprend pour l'essentiel une enceinte supérieure d'extension horizontale 210 et deux rangées de jupes multilobées, supportées en partie inférieure de celle-ci, référencées respectivement 230 et 250 d'une façon générale.

L'enceinte supérieure 210, selon le mode de réalisation représenté sur les figures, est composée d'une part d'une paroi inférieure 212, qui est raccordée à l'arrière à la surface inférieure 16 de la structure sustentée 12, en 213, et qui se prolonge vers l'avant par un voile 214, convexe vers l'extérieur et incliné généralement vers le haut, attaché à la surface inférieure 16 de la structure sustentée 12 en 216.

Le voile 214 précité peut être par exemple cylindrique de révolution, à génératrice horizontale.

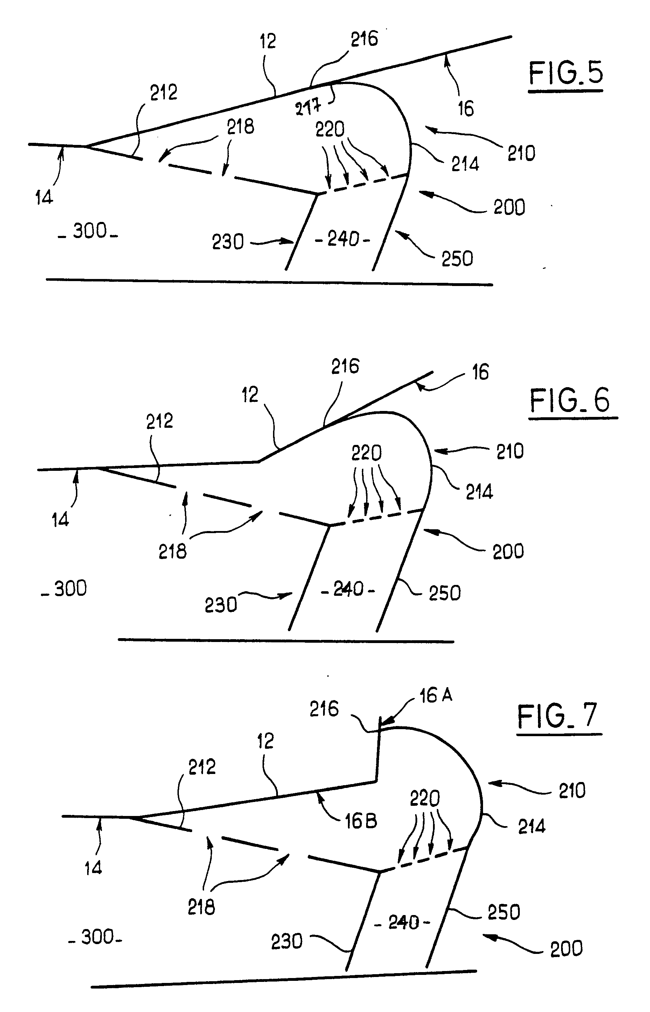

Par ailleurs, comme représenté sur les figures 5 et 6, le bord supérieur du voile avant 214 qui est dirigé vers l'arrière, se raccorde tangentiellement à la surface inclinée 16 de la structure sustentée 12 en un point de raccordement 217 distinct du point d'attache 216.

Bien entendu, pour assurer la fermeture avant du coussin central 300, l'enceinte supérieure 210 précitée s'étend transversalement au navire, la longueur de ladite enceinte 210, considérée transversalement à l'axe longitudinal 0 - 0 étant sensiblement égale à la longueur séparant les deux quilles latérales 20.

Il en est de même pour les deux rangées de jupes 230 et 250 précitées.

La jupe 230 la plus arrière est formée d'une pluralité de lobes 232 généralement cylindriques, dont les axes convergent vers le centre du coussin, de haut en bas, comme représenté sur les figures, la concavité des lobes 232 étant ouverte vers le coussin central 300, c'est-à-dire vers l'arrière du véhicule, ce qui en outre évite l'écopage.

Plus précisément, les lobes 232 sont délimités par des enveloppes hémi-cylindriques prolongées vers l'arrière par des voiles de maintien 234 parallèles à l'axe longitudinal 0 - 0 du navire.

Plus précisément, selon le mode de réalisation représenté, les voiles 234 sont raccordés par leur bord supérieur à la paroi 212 de l'enceinte supérieure 210.

La jupe la plus avant 250 est formée d'un même nombre de lobes 252.

Ces lobes 252 sont disposés respectivement en regard des lobes 232 précités, sur l'avant de ceux-ci.

Là encore, les lobes 252, généralement hémicylindriques, convergent vers le centre du coussin central 300 de haut en bas. La concavité des lobes 252 est ouverte vers le coussin central 300, donc vers l'arrière du navire, afin d'éviter l'écopage.

Les lobes 252 précités sensiblement hémicylindriques, se prolongent vers l'arrière par des voiles plans 254, parallèles à l'axe longitudinal 0 - 0 du navire, et raccordés d'une part par leur bord supérieur à la paroi 212 de l'enceinte supérieure 210, et d'autre part par l'intermédiaire de leur bord libre arrière incliné sur la verticale, au niveau de la ligne d'adjacence 236 des lobes arrière 232, comme représenté en particulier sur la figure 3.

On notera néanmoins que selon le mode de réalisation représenté sur les figures, les lobes 252 sont raccordés en extrémité supérieure sur l'enceinte 210 par l'intermédiaire d'une liaison sensiblement rectiligne et horizontale.

De ce fait, comme représenté en vue de face sur la figure 2, l'enveloppe des lobes 252 apparaît sous forme d'une combinaison d'une part d'un triangle généralement plan supérieur dont la base définie la liaison avec l'enceinte supérieure 210 et la pointe est dirigée vers le bas, et d'autre part de deux secteurs coniques raccordés de part et d'autre du triangle précité.

Les deux jupes 230 et 250 précédemment évoquées délimitent entre elles une série de chambres intermédiaires référencées 240.

Ces chambres 240 communiquent avec l'enceinte supérieure 210 par l'intermédiaire d'orifices 220. D'autre part, cette dernière communique avec le coussin central 300 par des orifices 218 ménagés dans la paroi 212 de l'enceinte 210.

Selon une caractéristique importante de la présente invention, les orifices 218 assurant une communication entre l'enceinte supérieure 210 et le coussin central 300 sont déterminés de telle sorte que la pression régnant dans l'enceinte supérieure 210 soit sensiblement égale à la pression dans le coussin central 300, en statique.

Par ailleurs, les orifices 220 assurant une communication entre l'enceinte supérieure 210 et les chambres intermédiaires 240 sont dimensionnés pour assurer une perte de charge telle que la pression en statique, à l'intérieur des chambres intermédiaires 240 soit comprise entre 0,3 et 0,75 fois la pression du coussin central 300. Les chambres intermédiaires 240, constituent ainsi une zone de transition entre la pression du coussin central 300 et la pression atmosphérique extérieure. Cette disposition permet de réduire la résistance de vague du coussin.

Par ailleurs, les inventeurs ont constaté que les valeurs relatives préférentielles de pression ci-dessus évoquées permettent d'assurer constamment un développement optimum des jupes 230 et 250, quelles que soient les conditions de navigation.

Comme cela est illustré sur les figures 5 à 7, l'inclinaison sur l'horizontale de la surface inclinée avant 16 de la structure sustentée 12, sur laquelle se raccorde l'extrémité supérieure du voile 214, peut selon les applications, prendre diverses valeurs.

Le choix de l'inclinaison est déterminé en fonction de la raideur de la suspension souhaitée, sachant que la raideur de la suspension est liée directement à l'inclinaison de la surface 16 par rapport à l'horizontale.

L'homme de l'art comprendra en effet aisément que, lorsque la surface 16 présente une faible inclinaison sur l'horizontale, comme représenté sur la figure 9, lors d'une élévation relative de la surface libre par rapport au navire, la mise en contact du voile avant 214 et de la paroi incliné 216 limite fortement le débattement vers le haut de la fermeture avant. La raideur de la suspension est alors importante.

Lorsque, comme représenté sur la figure 6, l'inclinaison sur l'horizontale de la surface 16 de la structure sustentée 12 est moyenne, le débattement vers le haut de la fermeture avant est favorisé. La souplesse de la suspension est alors supérieure.

Enfin, dans un cas extrême, lorsque comme représenté sur la figure 7, la surface 16 précitée est divisée en une première section 16B faiblement inclinée sur l'horizontale, prolongée vers l'avant par une seconde section 16A sensiblement verticale, sur laquelle est raccordée le voile 214 précité de l'enceinte supérieure 210, un fort débattement vers le haut de cette dernière et de l'ensemble de la fermeture avant est autorisé en cas d'une élévation relative de la surface libre. La souplesse de la suspension est alors maximale. Par ailleurs, selon une variante non représentée ici, une raideur variable en fonction de la position verticale de la fermeture peut être obtenue en réalisant soit une concavité soit des étagements appropriés de la surface 16.

Comme cela est représenté sur la figure 1, le cas échéant, une enveloppe complémentaire 260 peut être disposée sur l'avant de l'enceinte supérieure 210, en étant réccordée d'une part en 262 à l'extrémité supérieure de la rangée de jupes 250 la plus avant, et d'autre part, en 264 sur le tableau avant de la structure sustentée.

De préférence, cette enveloppe complémentaire 260 convexe vers l'extérieur est formée d'une enveloppe cylindrique de révolution à génératrice horizontale.

L'enveloppe complémentaire 260 communique avec l'enceinte supérieure 210 par l'intermédiaire d'orifices ménagés dans le voile 214, non représentés sur les figures pour simplifier l'illustration.

Par ailleurs, afin d'autoriser le fonctionnement du navire, soit par sustentation sur coussin à fluide sous pression, soit en navigation sur coque, les moyens de relevage sont de préférence associés à la fermeture avant 200.

Selon le mode de réalisation représenté sur la figure 1, ces moyens de relevage comprennent d'une façon générale, des câbles ou sangles 290 accrochés, d'une part en partie inférieure de la fermeture avant, par exemple sur la rangée de jupes 230 la plus inférieure, et associés d'autre part à un treuil 292 supporté par la structure sustentée 12. En outre selon une variante représentée sur la figure 1, un treuil 400 permet le relevage de l'enveloppe 260.

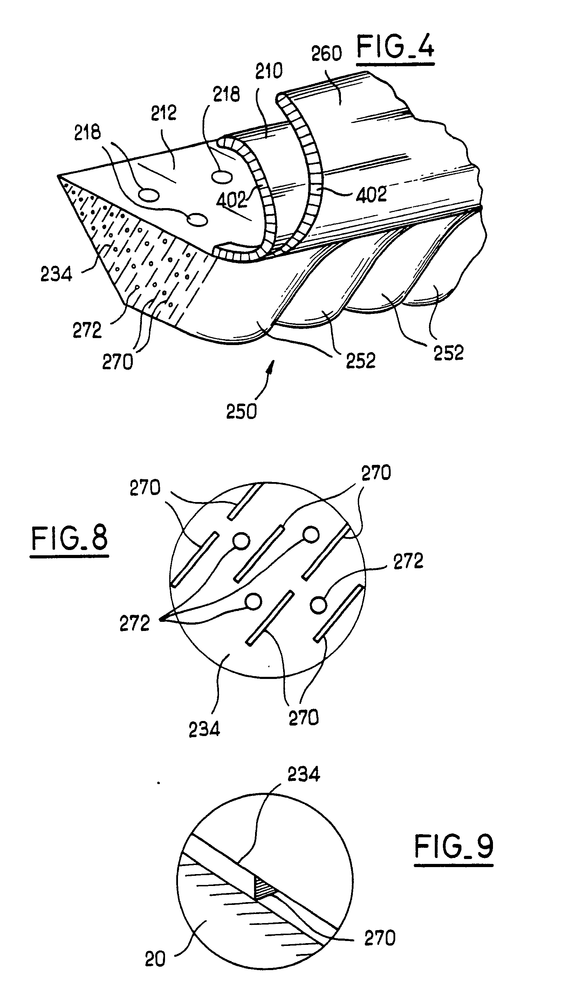

D'autre part, des éléments antifriction disposés sur les extrémités latérales de la fermeture avant pour glisser sur la paroi latérale de quilles respectivement associée sont formés, comme représenté sur les figures 4, 8 et 9 d'une pluralité de rangées de baguettes antifriction 270, rectilignes et discontinues, décalées longitudinalement d'une rangée à l'autre.

Ces baguettes antifriction 270 sont plus précisément disposées sur la surface extérieure des voiles 234 latéraux. De préférence, les baguettes antifriction 270 sont inclinées sur l'horizontale de façon similaire aux génératrices des lobes 232.

En outre, des trous de lubrification d'air 272 sont prévus dans les parois latérales 234 afin de limiter le frottement entre les baguettes antifriction 270 et les parois latérales des quilles 20.

Comme représenté sur la figure 9, la section droite des baguettes antifriction 270, considérée perpendiculairement à leur extension générale, est de préférence sensiblement triangulaire, la pointe de cette section reposant contre les surfaces latérales des quilles 20.

De préférence des éléments d'étanchéité formant bavettes 402 sont disposés sur les extrémités latérales de l'enceinte supérieure 210 et de l'enveloppe complémentaire 260 comme représenté sur la figure 4.

Bien entendu, la présente invention n'est aucunement limitée aux modes de réalisation qui viennent d'être décrits mais s'étend à toute variante conforme à son esprit.

Par exemple, les surfaces latérales internes des quilles 20 peuvent être non verticales.

Dans un tel cas, la géométrie des jupes multilobées 230 et 250 est adaptée en conséquence. Pour cela, par exemple, les lobes latéraux des jupes peuvent être de forme générale tronconique pour assurer un contact étroit entre la fermeture avant et les quilles latérales afin de limiter au mieux les fuites. De façon similaire, la géométrie de l'enceinte supérieure 210 sera aisément adaptée à la géométrie des quilles latérales 20.

De préférence, les fermetures sont réalisées en tissu souple enduit de néoprène.

La fermeture arrière 100 comprend pour l'essentiel une enceinte d'extension horizontale, s'étendant transversalement au navire entre les deux quilles 20. Cette enceinte est délimitée vers l'avant, comme représenté par exemple sur la figure 1, par un voile interne 102 (convexe vers le coussin à l'utilisation) incliné vers le haut en rapprochement du centre du coussin central.

Le volume interne de l'enceinte 100 est relié au générateur d'air sous pression 50 précité grâce à des premiers moyens formant conduits 54, qui débouchent dans un orifice 56, ménagé dans la paroi inférieure de la structure sustentée 12 au-dessus de l'enceinte 100, comme représenté sur la figure 1.

Des orifices de communication 150 sont par ailleurs prévus sur l'avant de l'enceinte 100 de telle sorte que l'alimentation en air sous pression du coussin central 300 soit réalisée partiellement par l'intermédiaire de l'enceinte arrière 100.

Sur les figures, l'alimentation de la fermeture arrière 100 par les premiers moyens formant conduits 54 est illustrée par les flèches référencées A.

Comme cela est représenté sur les figures, le coussin central 300, délimité par les quilles latérales 20, la fermeture avant 200 et la fermeture arrière 100, est également relié directement au générateur d'air sous pression 50 par l'intermédiaire d'un conduit référencé 58 sur les figures, débouchant dans le coussin central au niveau d'un orifice 60 ménagé dans la paroi inférieure de la structure sustentée 12.

Ainsi, le coussin central 300 est alimenté en partie directement par le ventilateur 50 (par l'intermédiaire du conduit 50), en partie indirectement par l'intermédiaire de la fermeture arrière 100.

Sur les figures, ces alimentations directe et indirecte du coussin sont illustrées respectivement par les flèches référencées B et C.

Pour autoriser le fonctionnement du navire soit sous forme d'un navire à effet de surface sustenté par un coussin de fluide sous pression, soit en navigation sur coque, des moyens sont prévus pour autoriser le relevage de la fermeture arrière 100.

Selon le mode de réalisation représenté sur la figure 1, ces moyens de relevage comprennent des câbles ou sangles 190 associés à des moyens formant treuil 192, disposés sur la structure sustentée 12.

Plus précisément, les câbles 190 qui s'étendent généralement verticalement à l'intérieur de la fermeture arrière sont reliés d'une part en extrémité inférieure, au point bas de l'enceinte 100, en 194, d'autre part sur le treuil 192, en traversant à cet effet un alésage 30 prévu dans la paroi inférieure de la structure sustentée 12.

Pour limiter néanmoins les fuites entre les quilles latérales 20 du navire et les extrémités latérales de la fermeture arrière 100, des éléments souples 180 formant bavette sont de préférence disposés sur les extrémités latérales de l'enceinte 100. Ces bavettes sont destinées à glisser sur la paroi latérale de quille qui leur est associée.

On distingue également sur la figure 1 des panneaux généralement horizontaux 160 disposés sur la partie inférieure de l'enceinte 100 pour entre portés au contact de l'eau.

Ces panneaux 160 remplissent une triple fonction.

Ils remplissent tout d'abord une fonction planante. L'effort qui s'exerce sur ces panneaux lors des contacts avec la surface libre a tendance à faire s'effacer la fermeture arrière.

De plus, ces panneaux 160 renforcent la partie inférieure de l'enceinte 100 et limite l'usure de celle-ci.

Enfin, ces panneaux 160 canalisent le débit de fuite de façon à réduire la trainée.

On notera également la présence d'orifices de vidange 162 dans la partie inférieure de la fermeture arrière. Ces orifices 162 peuvent être ménagés par exemple dans une zone inférieure commune au voile 102 et aux panneaux 160.

## Revendications

1. Navire à effet de surface du type comportant une structure sustentée (12) munie de deux quilles latérales (20), un dispositif de fermeture arrière (100) et un dispositif de fermeture avant (200) aptes à coopérer avec les quilles latérales (20) pour délimiter un coussin central de sustentation (300) alimenté par un générateur d'air sous pression (50), la fermeture avant comprenant une enceinte supérieure (210) s'étendant entre les deux quilles latérales (20) et une enceinte inférieure (230, 250),
- l'enceinte supérieure (210) d'extension horizontale étant constituée d'une paroi inférieure (212) connectée endessous de la structure sustentée (12) et d'une paroi avant (214) convexe vers l'extérieur attachée vers le haut à la structure sustentée (12), caractérisé en ce que:
- l'enceinte inférieure est délimitée par deux rangées de jupes inférieures multilobées (230, 250), raccordées en-dessous de l'enceinte supérieure (210), délimitant entre elles des chambres intermédiaires (240),
- l'enceinte supérieure (210) est alimentée par le coussin central et l'enceinte inférieure par l'enceinte supérieure, pour assurer un pilotage vertical de la fermeture avant.

2. Navire à effet de surface selon la revendication 1, caractérisé par le fait que la structure sustentée (12) présente à l'avant une paroi (16) inclinée vers le haut en éloignement du centre du coussin central (300) et par le fait que l'enveloppe de l'enceinte supérieure (210) est raccordée tangentiellement sur cette paroi inclinée (16) en un point (217) distinct du point d'attache (216).

3. Navire à effet de surface selon la revendication 1, caractérisé par le fait que la structure sustentée (12) présente à l'avant une paroi (16) inclinée vers le haut en éloignement du centre du coussin central (300) et par le fait que l'enveloppe de l'enceinte supérieure (210) est raccordée de façon sécante à la structure sustentée (12) à l'avant de la paroi inclinée( 16).

4. Navire à effet de surface selon l'une des revendications 1 à 3, caractérisé par le fait que la fermeture avant (200) comprend en outre une enveloppe complémentaire (260) disposée sur l'avant de l'enceinte supérieure (210) associée et raccordée d'une part à l'extrémité supérieure de la rangée de jupes (250) la plus avant, d'autre part sur l'avant de la structure sustentée (12), l'enveloppe (260) étant alimentée par perte de charge à partir de l'enceinte supérieure (210).

5. Navire à effet de surface selon l'une des revendications 1 à 4, caractérisé par le fait que des orifices (218, 220) sont ménagés dans l'enceinte supérieure (210) de la fermeture avant pour assurer d'une part, l'alimentation de celle-ci à partir du coussin central (300) et aure part, l'alimentation des chambres intermédiaires (240) à partir de l'enceinte supérieure (210) et sont adaptés pour assurer en statique une pression dans l'enceinte (210) du même ordre de grandeur que la pression dans le coussin central (300) et une pression dans les chambres intermédiaires (240) comprise entre 0,3 et 0,75 fois la pression dans le coussin central (300).

6. Navire à effet de surface selon l'une des revendications 1 à 5, caractérisé par le fait que des moyens de relevage (290, 292) sont associés à la fermeture avant, en vue d'un relevage de celle-ci pour navigation sur coque.

7. Navire à effet de surface selon la revendication 6, caractérisé par le fait que les moyens de relevage comprennent des câbles (290) fixés en partie inférieure de la fermeture et associés à des treuils (192, 292) supportés par la structure sustentée.

8. Navire à effet de surface selon les revendications 6 ou 7, caractérisé en ce que les moyens de relevage comprennent des treuils (400) d'enroulement de l'enveloppe complémentaire (260).

9. Navire à effet de surface selon l'une des revendications 1 à 8, caractérisé par le fait que des éléments antifriction (270) sont disposés sur les extrémités latérales des rangées de jupes multilobées (250) de la fermeture avant pour glisser sur la paroi latérale des quilles respectivement associée.

10. Navire à effet de surface selon la revendication 9, caractérisé par le fait que les éléments antifriction sont constitués d'une pluralité de rangées de baguettes antifriction (270) rectilignes et discontinues, des trous de lubrification (272) étant par ailleurs prévus dans la paroi latérale des jupes multilobées.

11. Navire à effet de surface selon l'une quelconque des revendications 4 à 8, caractérisé en ce que l'étanchéité de la structure sustentée (12) est complétée par la décharge de l'enceinte supérieure (210) dans l'enveloppe complémentaire (260), la décharge pouvant être ajustée par des éléments d'étanchéité formant bavette (402) dont sont dotées les extrémités latérales de l'enceinte supérieure (240) et de l'enveloppe complémentaire (260).

**Patentansprüche**

1. Bodeneffektboot mit einer Tragstruktur (12) mit zwei Seitenkielen (20), einer hinteren Abschlussvorrichtung (100) und einer vorderen Abschlussvorrichtung (200), die zur Begrenzung eines von einem Drucklufterzeuger (50) gespeisten zentralen Tragkissens mit den Seitenkielen zusammenwirken können, wobei der vordere Abschluss eine sich zwischen den beiden Seitenkielen (20) erstreckende obere Zelle (210) und eine untere Zelle (230, 250) umfasst und die sich horizontal erstreckende obere Zelle (210) von einer unten an die Tragstruktur (12) angeschlossenen unteren Wandung (212) und einer nach aussen konvexen vorderen Wandung (214) gebildet wird, die nach oben an die Tragstruktur (12) angeschlossen ist dadurch gekennzeichnet, dass die untere Zelle durch zwei mehrfachgelappte untere Schürzenreihen (230, 250) begrenzt ist, die unter der oberen Zelle (210) angeschlossen sind und zwischen sich Zwischenkammern (240) begrenzen, dass die obere Zelle (210) durch das zentrale Tragkissen und die untere Zelle durch die obere Zelle versorgt wird, um eine vertikale Steuerung des vorderen Abschlusses zu gewährleisten.

2. Bodeneffektboot nach Anspruch 1, dadurch gekennzeichnet, dass die Tragstruktur (12) vorn eine schräg nach oben gerichtete, sich von dem zentralen Tragkissen (300) entfernende Wandung (16) aufweist, und dass der Mantel der oberen Zelle (210) tangential an diese geneigte Wandung (16) in einem Punkt (217) angeschlossen ist, der von dem Angriffspunkt (216) verschieden ist.

3. Bodeneffektboot nach Anspruch 1, dadurch gekennzeichnet, dass die Tragstruktur (12) vorn eine schräg nach oben gerichtete, sich von dem zentralen Tragkissen (300) entfernende Wandung (16) aufweist, und dass der Mantel der oberen Zelle (210) schneidend an die Tragstruktur (12), vor der schrägen Wandung (16) angeschlossen ist.

4. Bodeneffektboot nach einem der vorstehenden Ansprüche 1 bis 3, dadurch gekennzeichnet, dass der vordere Abschluss (200) ferner einen zusätzlichen Mantel (260) umfasst, der am vorderen Teil der zugeordneten oberen Zelle (210) angeordnet ist und einerseits mit dem oberen Ende der vordersten Schürzenreihe (250) und andererseits mit dem vorderen Teil der Tragstruktur (12) verbunden ist, wobei der Mantel (260) durch Druckverlust von der oberen Zelle (210) aus beaufschlagt wird.

5. Bodeneffektboot nach einem der vorstehenden Ansprüche 1 bis 4, dadurch gekennzeichnet, dass in der oberen Zelle (210) des vorderen Abschlusses Öffnungen (218, 220) angebracht sind, um einerseits die Versorgung dieses Abschlusses aus dem Zentralkissen (300) und andererseits die Versorgung der Zwischenkammern (240) aus der oberen Zelle (210) zu gewährleisten, und dass sie angepasst sind, um bei statischem Betrieb in der Zelle (210) einen Druck in der Grössenordnung des Druckes im Zentralkissen (300) sowie in den Zwischenkammern (240) einen Druck aufrechtzuerhalten, der zwischen dem 0,3- und 0,75- fachen des Druckes in dem Zentralkissen (300) liegt.

6. Bodeneffektboot nach einem der vorstehenden Ansprüche 1 bis 5, dadurch gekennzeichnet, dass dem vorderen Abschluss Hebemittel (290, 292) zum Anheben desselben für eine Navigation auf dem Schiffsrumpf zugeordnet sind.

7. Bodeneffektboot nach Anspruch 6, dadurch gekennzeichnet, dass die Hebemittel Kabel umfassen, die am unteren Teil des Abschlusses befestigt und von der Tragstruktur (12) getragenen Winden (192, 292) zugeordnet sind.

8. Bodeneffektboot nach einem der vorstehenden Ansprüche 6 oder 7, dadurch gekennzeichnet, dass die Hebemittel Winden (400) zum Aufrollen des zusätzlichen Mantels (260) umfassen.

9. Bodeneffektboot nach einem der vorstehenden Ansprüche 1 bis 8, dadurch gekennzeichnet, dass Antifriktionselemente (270) an den seitlichen Endflächen der mehrfachgelappten Schürzenreihen (250) des vorderen Abschlusses angeordnet sind, um auf der jeweils zugeordneten Seitenwand der Kiele zu gleiten.

10. Bodeneffektboot nach Anspruch 9, dadurch gekennzeichnet, dass die Antifriktionselemente von einer Mehrzahl von in Reihen angeordneten geradlinigen und unterbrochenen Antifriktionsleisten (270) gebildet sind, wobei andererseits Schmierlöcher in der Seitenwand der mehrfachgelappten Schürzen vorgesehen sind.

11. Bodeneffektboot nach einem der vorstehenden Ansprüche 4 bis 8, dadurch gekennzeichnet, dass die Dichtheit der Tragstruktur (12) durch den Ablass der oberen Zelle (210) in den zusätzlichen Mantel (260) ergänzt wird, wobei der Ablass durch lappenförmige Dichtungselemente (402) eingestellt werden kann, mit denen die seitlichen Endflächen der oberen Zelle (240) und der zusätzliche Mantel (260) versehen sind.

## Claims

1. A surface-effect ship of the type including a supported structure (12) equipped with two side keels (20), an aft closure (100) and a fore closure (200), capable of co-operating with the side keels (20) for delimiting a central supporting cushion (300) supplied by a pressurized air generator (50), the fore closure comprising an upper enclosure (210) extending between the two side keels (20) and a lower enclosure (230, 250),
- the upper enclosure (210) which extends horizontally consisting of a lower wall (212) connected below the supported structure (12) and an outwardly convex front wall (214) attached upward to the supported structure (12), characterized in that:
- the lower enclosure is delimited by two rows of multi-lobe lower skirts (230, 250) attached below the upper enclosure (210) delimiting intermediate chambers (240) between them,
- the upper enclosure (210) is supplied by the central cushion and the lower enclosure by the upper enclosure in order to ensure a vertical control of the fore closure.

2. A surface-effect ship as claimed in Claim 1, characterized by the fact that the supported structure (12) presents in its fore section a wall (16) sloped upwardly from the centre of the central cushion (300) and by the fact that the envelope of the upper enclosure (210) is tangentially connected to this sloped wall (16) at a point (217) distinct from the attaching point (216).

3. A surface-effect ship as claimed in Claim 1, characterized by the fact that the supported structure (12) presents in its fore section a wall (16) sloped upwardly from the centre of the central cushion (300) and by the fact that the envelope of the upper enclosure (210) is connected in a secant manner to the supported structure (12) ahead of the sloped wall (16).

4. A surface-effect ship as claimed in any of Claims 1 to 3, characterized by the fact that the fore closure (200) further encludes an additional envelope (260) located ahead of the upper enclosure (210) associated with and connected to the upper end of the most forward skirt row (250), on the one hand, and ahead of the supported structure (12), on the other hand, the envelope (260) being supplied by a loss of pressure from the upper enclosure (210).

5. A surface-effect ship as claimed in any of Claims 1 to 4, characterized by the fact that holes (218, 220) are pierced through the upper enclosure (210) of the front closing device in order to ensure the supply of said enclosure from the central cushion (300), on the one hand and the supply of the intermediate chambers (240) from the upper enclosure (210), on the other hand, and are capable of providing a static pressure in the inclosure (210) on the same order of magnitude as the pressure in the central cushion (300) and a pressure in the intermediate chambers (240) ranging from 0.3 to 0.75 times the pressure in the central cushion (300).

6. A surface-effect ship as claimed in any of Claims 1 to 5, characterized by the fact that the raising means (290, 292) are associated with the fore closure with a view to raising the latter for the navigation on the hull.

7. A surface-effect ship as claimed in Claim 6, characterized by the fact that the raising means comprises cables (290) attached to the lower portion of the closure and associated with winches (192, 292) carried by the supported structure.

8. A surface-effect ship as claimed in Claims 6 or 7, characterized in that the raising means comprise winches (400) for wrapping the additional envelope (260).

9. A surface-effect ship as claimed in any of Claims 1 to 8, characterized by the fact that antifriction elements (270) are installed at the side ends of the multi-lobe skirt rows (250) of the fore closure so as to slide along the respectively associated side wall of keels.

10. A surface-effect ship as claimed in Claim 9, characterized by the fact that the antifriction elements consist of a plurality of linear and discontinuous antifriction rods (270), lubrication holes (272) being otherwise pierced through the side walls of the multi-lobe skirts.

11. A surface-effect ship as claimed in any of Claims 4 to 8, characterized in that the tightness of the supported structure (12) is reinforced by the discharge of the upper enclosure (210) into the additional enclosure (260), the discharge being adjustable by means of tightness elements forming an edge-strip (402) equipping the side ends of the upper enclosure (240) and of the additional envelope (260).

FIG_1

FIG_2

FIG_3

0 182 694

FIG_4

FIG.8

FIG_9

FIG.5

FIG. 6

FIG_ 7